# EUROPÄISCHE PATENTSCHRIFT

(11) **EP 1 995 087 B1**
(45) Veröffentlichungstag und Bekanntmachung des Hinweises auf die Patenterteilung: **24.10.2012**
(21) Anmeldenummer: 08003770.8
(22) Anmeldetag: 29.02.2008
(51) Int. Cl.: B60G 3/20, B60G 7/00

(54) **Radaufhängung für Kraftfahrzeuge**
Wheel suspension for motor vehicles
Suspension de roue pour véhicules automobiles

(30) Priorität: 25.05.2007 DE 102007024586
(43) Veröffentlichungstag der Anmeldung: 26.11.2008
(73) Patentinhaber: Audi AG, 85045 Ingolstadt (DE); Bentley Motors Limited, Crewe, Cheshire CW1 3PL (GB)
(72) Erfinder: Züge, Frank, 85110 Schelldorf (DE); Collin, Simon, Nantwich, CW565Y (GB); Gibson, Jonathan, Crewe, CW13RY (GB); Sharp, Keith, Cheshire, CW57DB (GB)
(74) Vertreter: Asch, Konrad

(56) Entgegenhaltungen:
- DE-A1- 2 035 307
- DE-A1- 4 020 547
- JP-U- H0 574 909
- US-A- 5 435 591
- US-A- 5 558 360

## Beschreibung

Die Erfindung betrifft eine Radaufhängung für Kraftfahrzeuge, insbesondere eine unabhängige Radaufhängung für die hinteren Räder von Kraftfahrzeugen, gemäß dem Oberbegriff des Anspruchs 1.

Eine derartige Radaufhängung ist beispielsweise in Fig. 2 der DE 20 35 307 A1 gezeigt. Dabei ist in der oberen Lenkerebene ein biege- und verwindungssteifer Trapezlenker und in der unteren Lenkerebene ein Dreieckslenker vorgesehen, die über zueinander geneigte Schwenkachsen am Aufbau oder einem Hilfsrahmen des Kraftfahrzeuges gelagert sind. Der Radträger ist über zwei Lagerstellen an dem Trapezlenker und über eine untere Lagerstelle an dem Dreieckslenker angelenkt. Damit gelingt es, bei entsprechender kinematischer Auslegung der Radführungselemente eine präzise Radführung mit Schrägfederung und Brems- bzw. Anfahrnickausgleich zu schaffen. Zur Beeinflussung des Spur- und Sturzverhaltens der Radaufhängung insbesondere bei Seitenkräften und beim Durchfahren von Kurven ist zudem an der Anlenkung des Trapezlenkers am Radträger ein Kardangelenk mit unsymmetrisch ausgeführten Gelenkachsen dazwischen geschaltet, mittels dem der Radaufhängung zusätzlich eine Untersteuertendenz aufgeprägt werden soll. Nachteilig hierbei ist, dass die Verdrehsteifigkeit des Radträgers beim Bremsen aufgrund des Kardangelenkes nicht von der Verwindungssteifigkeit des Trapezlenkers abhängt, sondern die Bremskräfte überwiegend in Richtung der in der Fig.2 der DE 20 35 307 A1 mit X₂ bezeichneten Achse abgestützt werden. Dies hat eine relativ hohe Drehweichheit des Radträgers zur Folge, was zu unerwünschten Schwingungsneigungen führen kann. Weiter nachteilig bei einem derartigen Aufbau ist, dass sowohl Sturz als auch Vorspur über die beiden Lagerstellen des Trapezlenkers am Achsträgers eingestellt werden müssen, so dass mit der Spur gleichzeitig auch der Sturz verstellt wird und umgekehrt. Eine unabhängige Einstellung von Sturz und Vorspur ist hier nur schwer möglich, so dass diese Einstellung iterativ in mehreren Schritten und damit zeitaufwändig sowie fehleranfällig erfolgt.

Aus der DE 40 20 547 A1 ist eine Vorrichtung zur aktiven Verstellung eines Kraftfahrrades über eine eine Stellglied umfassende Einrichtung bekannt, bei der die Radführungsglieder unabhängig von der Einrichtung unter und/oder oberhalb einer Raddrehachse an einem Radträger angelenkt und am Fahrzeugaufbau schwenkbar gehalten sind. Die Einrichtung umfasst ein mit dem Radträger unter Zwischenschaltung einer Spurstange verbundenes Stellglied, wobei das Stellglied zu zwangsweisen Radstellungsänderungen in Abhängigkeit von Fahrparametern um eine unterhalb der Raddrehachse durch ein radträgerseitiges Spurstangengelenk und ein radträgerseitiges Lenkergelenk gebildete Schwenkachse verstellbar ist. Die Spurstange ist in einem am Radträger angelenkten Kipphebelelement gehalten, das an seinem oberen freien Ende die Spurstange in einem Lager um eine horizontale Achse abstützt und das an seinem unteren freien Ende in einem Schwenklager mit einer horizontalen Achse den Radführungslenker aufnimmt.

Aus der US 5,435,591 ist ferner ein Aufbau einer Radaufhängung bekannt, bei der ein oberer trapezartiger Querlenker über ein Schwenkgelenk mit einem Verbindungsarm schwenkbar verbunden ist. Der Verbindungsarm ist über ein Kugelgelenk mit einem Radträger verbunden, an dem wiederum an einem separaten Arm eine Spurstange angebunden ist.

Aufgabe der Erfindung ist es, eine Radaufhängung vorzuschlagen, mittels der vergleichbare Eigenschaften bei einer baulich günstigeren und robusteren Konstruktion und größeren Freiheitsgraden in Anordnung und Auslegung der Radaufhängung erzielbar sind.

Diese Aufgabe wird erfindungsgemäß mit den Merkmalen des Anspruchs 1 gelöst. Besonders vorteilhafte Weiterbildungen der Erfindung sind Gegenstand der Unteransprüche.

Gemäß Anspruch 1 wird vorgeschlagen, dass das Koppelelement so zwischen verwindungs- und biegesteifem, Trapezlenker als oberen Querlenker und Radträger ausgebildet und angeordnet ist, dass dieser obere Querlenker im Wesentlichen keine Spurführungseigenschaften aufweist, was dadurch erreicht wird, dass das Koppelelement in Fahrzeugquerrichtung nachgiebig ausgebildet ist. Die Spurführungseigenschaften werden durch einen zusätzlichen, spurführenden Lenker eingestellt. Weiter ist erfindungsgemäß vorgesehen, dass das Koppelelement in Fahrzeughochachsenrichtung als Vertikalrichtung steif ausgebildet ist. Erfindungsgemäß ist das Koppelelement durch eine in etwa senkrecht ausgerichtete Koppelstange gebildet, die mit lediglich einer der äußeren Lagerstellen des verwindungs- und biegesteif ausgebildeten Trapezlenkers, und mit dem Radträger in Fahrzeugquerrichtung nachgiebig verbunden ist, und zwar mittels wenigstens einer in etwa in Fahrzeuglängsrichtung ausgerichteten Dreh- bzw. Gelenkachse. Eine zweite äußere Lagerstelle des Trapezlenkers ist direkt mit dem Radträger verbunden. Mit einer derartigen Ausbildung wird, wie dies nachfolgend noch näher erläutert wird, erreicht, dass der Trapezlenker zwar keine bzw. im Wesentlichen keine spurführenden Eigenschaften mehr aufweist, jedoch seine stützende Wirkung für den Radträger beim Bremsen nicht verliert.

Erfindungsgemäß kann somit über das bevorzugt als Koppelstange ausgebildete Koppelelement in einfacher Weise der Radträger hinsichtlich des Spurverhaltens der Radaufhängung von dem verwindungs- und biegesteifen oberen Querlenker entkoppelt und dieses in gewünschter Weise über den spurführenden Lenker gesteuert werden. Die gewünschte Verdrehsteifigkeit beim Bremsen des Rades wird durch die in Vertikal- bzw. Fahrzeughochachsenrichtung steif ausgebildete Koppelstange zur Verfügung gestellt, während der Radsturz unverändert durch die kinematische Auslegung des verwindungs- und biegesteifen oberen Querlenkers und des weiteren Querlenkers bestimmt wird. D. h. mit anderen Worten, dass mit der erfindungsgemäßen Ausgestaltung die Spurführung auch beim Bremsen über den spurführenden Lenker (Spurstange) gesteuert werden kann, da die Verdrehung des Radträgers über die vertikale Steifigkeit des Koppelelementes abgestützt wird, wodurch gleichzeitig eine Spurführung bzw. -änderung beim Bremsen mittels der Spurstange möglich wird. In vereinfachter Weise können somit sowohl der Sturz des Rades als auch dessen Spur separat präzise eingestellt und konstruktiv bestimmt werden.

Bevorzugt ist dieser erfindungsgemäße Aufbau mit einem in einer oberen Lenkerebene liegenden Trapezlenker als oberen Querlenker und wenigstens einem weiteren, in einer diesbezüglich unteren Lenkerebene liegenden weiteren Querlenker realisierbar. Mit einer derartigen Anordnung kann der untere Lenker sehr tief im Felgenbett angeordnet werden, was den Vorteil einer hohen Sturzsteifigkeit bei Seitenkräften, wie z. B. der Kreisfahrt, ergibt. Der Trapezlenker weist bevorzugt genau zwei äußere, dem Radträger zugeordnete Lagerstellen auf und ist ferner zudem über bevorzugt zwei innere Lagerstellen am Aufbau des Kraftfahrzeuges oder an einem Hilfsrahmen des Kraftfahrzeuges festgelegt.

Die aufbauseitigen Dreh- bzw. Gelenkachsen der beiden Querlenker sind weitgehend parallel zueinander ausgerichtet und angeordnet, um eine unerwünschte kinematische Verzwängung der Achse beim Federn zu vermeiden.

Das Koppelelement ist ferner gemäß einer weiteren bevorzugten Ausgestaltung außerhalb einer in Achs- bzw. Fahrzeugquerrichtung verlaufenden, sogenannten senkrechten Radmittenebene angeordnet, und zwar bevorzugt in Fahrtrichtung gesehen hinter der senkrechten Radmittenebene zwischen einer hinteren, äußeren Lagerstelle des bevorzugt Trapezlenkers und dem Radträger, wodurch sich die zuvor genannten erfindungsgemäßen Vorteile der Nachgiebigkeit in Querrichtung und der Stützwirkung für den Radträger beim Bremsen noch zusätzlich verstärken lassen.

In einer vorteilhaften Weiterbildung der Erfindung ist der zusätzliche, spurführende Lenker außerhalb der senkrechten Radmittelebene am Radträger und andererseits aufbauseitig, insbesondere an einem Achsträger, angebunden bzw. angelenkt. Kommt dieser eine Spurstange ausbildende spurführende Lenker vor der Radmitte zu liegen, d. h. in Fahrzeuglängsrichtung bzw. in Fahrtrichtung gesehen vor der senkrechten Radmittenebene, erleichtert dies die Auslegung des Längspols.

Zur Erzielung einer baulich günstigen Anordnung und günstiger kinematischer Eigenschaften der Radaufhängung kann der spurführende zusätzliche Lenker zwischen der oberen und der unteren Lenkerebene verlaufen. Er ermöglicht dabei durch gezielte Positionierung der Lagerstellen (wirksame Länge) und dessen Neigung gegenüber einer Horizontalen eine definierte Spursteuerung des Rades über dessen Federweg und bei Seitenkrafteinflüssen.

Besonders günstige kinematische Eigenschaften können auch dadurch erzielt werden, dass der spurführende Lenker von seiner radträgerseitigen Lager- bzw. Anbindungsstelle ausgehend in Fahrzeugquerrichtung und/oder in Richtung Fahrzeugmitte schräg nach oben oder unten, in Fahrzeughochachsenrichtung gesehen, geneigt ist, und zwar bevorzugt mit einem Winkel von -5° bis +30°, höchst bevorzugt von +4 bis +10° gegen eine Fahrzeughorizontalebene geneigt.

Bevorzugt kann der zusätzliche, spurführende Lenker auf der gleichen Seite wie das Koppelelement am Radträger angelenkt sein, bevorzugt mit in etwa gleichem Abstand, obwohl auch eine beidseitig der senkrechten Radmittenebene liegende Konstruktion technisch möglich ist. Die Anordnung erfolgt hierbei bevorzugt so, dass der spurführende Lenker in Fahrzeughochachsenrichtung gesehen unterhalb des Koppelelements am Radträger angelenkt ist.

Des weiteren kann die direkt mit dem Radträger verbundene Lagerstelle des Trapezlenkers mit der radträgerseitigen Lagerstelle des Lenkers der anderen Lenkerebene eine Lenkachse definieren, die zumindest annähernd durch die Radmittelachse des Rades verläuft. Dies verbessert die Entkopplung zwischen Sturz- und Spurauslegung, wobei ferner die Sturzsteifigkeit des Rades und dessen Geradführung verbessert sind.

Bevorzugt liegt eine zweite äußere bzw. vordere Lagerstelle des Trapezlenkers in Fahrzeuglängsrichtung bzw. in Fahrtrichtung gesehen vor der ersten äußeren bzw. hinteren Lagerstelle und weist einen Abstand von 0 bis 500 mm, bevorzugt von 30 bis 150 mm, von der senkrechten Radmittenebene auf.

Besonders bevorzugt ist auch eine alternative oder zusätzliche Ausgestaltung, bei der die beiden äußeren Lagerstellen des Trapezlenkers einen Abstand von 0, insbesondere 5, bis 500 mm, bevorzugt von 100 bis 250 mm, voneinander aufweisen. Weiter kann zusätzlich oder alternativ vorgesehen sein, dass die zweite äußere bzw. vordere Lagerstelle im Verhältnis zur ersten äußeren bzw. hinteren Lagerstelle des Trapezlenkers in Fahrzeugquerrichtung dergestalt nach innen zur Fahrzeugmitte hin versetzt sein, dass der Längspol in Fahrzeuglängsrichtung bzw. in Fahrtrichtung gesehen vor und/oder über Radmitte positioniert ist, was z. B. bei vorne liegendem spurführenden Lenker vorteilhaft sein kann. Indem der vordere Lagerpunkt des Trapezlenkers am Radträger nach hinten versetzt wird, ist sein Abstand zur Radmitte in Längsrichtung gesehen sehr gering, was den Lagerpunkt in eine optimale Position für die Sturzeinstellung bringt. Die Spureinstellung kann nun unabhängig von der Sturzeinstellung über die Spurstange bzw. den zusätzlichen spurführenden Lenker erfolgen. Indem der vordere Lagerpunkt des Trapezlenkers am Radträger nach innen versetzt wird, kann der Längspol vor und über Radmitte positioniert werden, wie eben beschrieben, und zwar ohne negative Beeinflussung der Spurkurve.

In baulich einfacher und fertigungstechnisch günstiger Konstruktion können der zusätzliche, spurführende Lenker und die Koppelstange an einem an den Radträger angeformten Lenkarm angelenkt sein.

Ferner können die Lagerkennungen der Lagerstellen des spurführenden Lenkers steifer als die Lagerkennungen der übrigen Lenker ausgelegt sein. Daraus resultiert eine elastokinematische Auslegung der Radaufhängung mit sich einstellender Vorspur des Rades bzw. mit gezielter Untersteuertendenz bei Seitenkräften und Kurvenfahrten des Kraftfahrzeuges.

Insbesondere kann der mit dem Trapezlenker kombinierte Lenker der unteren Lenkerebene ein Dreieckslenker mit zwei aufbauseitigen Lagerstellen und einer radträgerseitigen Lagerstelle sein, der dementsprechend auch eine günstige Abstützung der Tragfeder und gegebenenfalls des Stoßdämpfers der Radaufhängung ermöglicht.

Dabei kann in baulich günstiger Anordnung die Tragfeder in Fahrtrichtung des Kraftfahrzeuges vor dem Trapezlenker und der Stoßdämpfer hinter dem Trapezlenker angeordnet sein, wobei die Tragfeder an dem unteren Querlenker bzw. Dreieckslenker und/oder der Stoßdämpfer am Radträger oder ebenfalls am Dreieckslenker entsprechend abgestützt ist bzw. sind. Im letzteren Falle können sich dynamische Feder- und Dämpfermomente beiderseits der Winkelhalbierenden des Dreieckslenkers abstützen, so dass sich Biege- und Kippmomente gegenseitig ausgleichen können.

Zur Erzielung einer baulich kompakten Konstruktion der Radaufhängung können ferner der Trapezlenker und der spurführende Lenker mit Einbuchtungen für den Freigang der Tragfeder und des Stoßdämpfers versehen sein.

Die zuvor beschriebenen Maßnahmen sind insbesondere für eine nicht gelenkte Hinterachse vorteilhaft, können jedoch grundsätzlich auch in Verbindung mit gelenkten Hinterachsen eingesetzt werden. In einer besonders bevorzugten Weiterbildung der Erfindung kann so der spurführende Lenker zudem mit einem Stellelement gekoppelt sein, insbesondere aufbauseitig an einem Aktuator oder einer Lenkeinrichtung angelenkt sein. Damit kann eine aktive Fahrwerksregelung mit um vorgegebene Winkelgrade lenkbaren, hinteren Rädern der Radaufhängung abhängig von fahrdynamischen Parametern des Kraftfahrzeuges wie Geschwindigkeit, Lenkeinschlag der Vorderräder, Gierrate, Seitenkrafteinflüssen, etc. zur Verfügung gestellt werden.

Ein Ausführungsbeispiel der Erfindung ist im folgenden mit weiteren Einzelheiten näher beschrieben. Die schematische Zeichnung zeigt in:
- Fig. 1: in raumbildlicher Darstellung eine Radaufhängung für die hinteren Räder eines Kraftfahrzeuges, mit einem oberen Trapezlenker, einem unteren Dreieckslenker, einem Radträger, einer Tragfeder und einem Teleskop-Stoßdämpfer, sowie mit einer Koppelstange und einem zusätzlichen, spurführenden Lenker;
- Fig. 2: die Radaufhängung nach Fig. 1 in einer grobschematischen Seitenansicht; und
- Fig. 3: die Radaufhängung nach den Fig. 1 und 2 in einer Rückansicht.

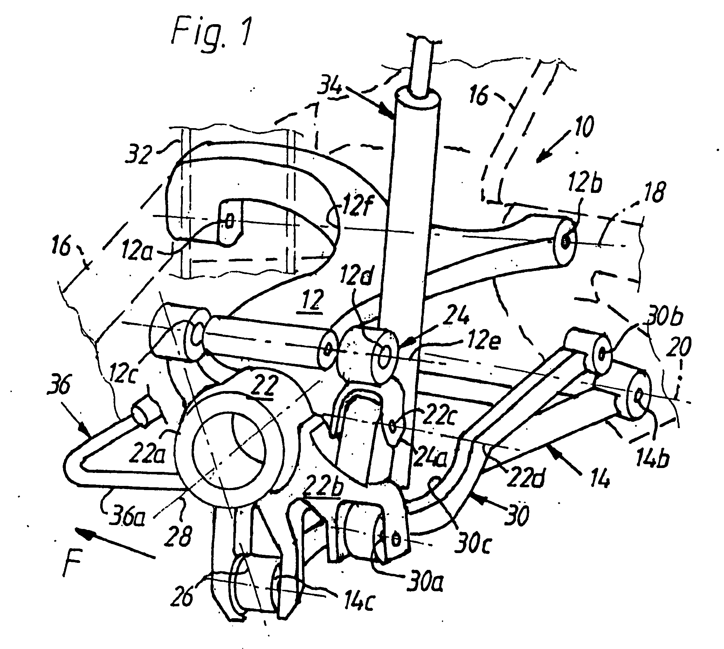

Die unabhängige, linksseitige Radaufhängung 10 für Kraftfahrzeuge gemäß den **Fig. 1 bis 3** weist als Querlenker in einer oberen Lenkerebene einen Trapezlenker 12 und in einer unteren Lenkerebene einen Dreieckslenker 14 auf, die in bekannter Weise biege- und verwindungssteif ausgelegt und über Lagerstellen 12a, 12b und 14a, 14b an einem nur in gestrichelten Linien angedeuteten Hilfsrahmen 16 (**Fig. 1**) in entsprechenden Lagerkonsolen (nicht dargestellt) schwenkbar angelenkt sind. Der Hilfsrahmen 16 wiederum ist über schwingungsdämpfende Lager am Aufbau des Kraftfahrzeuges befestigt.

Die Lagerstellen 12a, 12b, 14a, 14b sind in bekannter Weise Gummi-Metall-Hülsenlager und definieren die aufbauseitigen Schwenkachsen 18, 20 der Lenker 12, 14, die im Wesentlichen in Längsrichtung des Kraftfahrzeuges (vgl. eingezeichnete Fahrtrichtung F) und damit im Wesentlichen parallel zueinander verlaufen und räumlich zur Definierung eines gezielten kinematischen Verhaltens zueinander geneigt sind.

Die Lenker 12, 14 sind außenliegend über Lagerstellen 12c, 12d und 14c an einem Radträger 22 angelenkt, wobei die Lagerstellen 12c, 12d, 14c wiederum durch Gummi-Metall-Hülsenlager gebildet sind. In dem Nabenteil 22a des Radträgers 22 ist das nicht dargestellte Hinterrad des Kraftfahrzeuges drehbar gelagert. Ferner trägt der Radträger 22 einen Bremssattel einer nicht dargestellten Scheibenbremse; das Hinterrad ist über eine Antriebswelle (ebenfalls nicht dargestellt) angetrieben.

Die hintere Lagerstelle 12d des Trapezlenkers 12 ist durch eine Gelenkverbindung bzw. eine Koppelstange 24 hergestellt, die im Wesentlichen senkrecht ausgerichtet den Trapezlenker 12 mit einem entgegen der Fahrtrichtung F des Kraftfahrzeuges nach hinten ragendem Lenkarm 22b des Radträgers 22 über eine weitere Lagerstelle 22c gelenkig verbindet. Wie ersichtlich ist, trägt die Koppelstange 24 dazu ein oberes Lagerauge (in **Fig. 1** mit dem Bezugszeichen 12d versehen) und ein unteres Gabelstück 24a, das mit einem Lagerauge in dem Lenkarm 22b (in **Fig. 1** bei 22c) zusammenwirkt. Die die Lagerstellen 12c,12d, 22c und weitere Lagerstellen durchdringenden Befestigungsschrauben sind der einfacheren Darstellung wegen nicht eingezeichnet.

Ferner sind die vordere Lagerstelle 12c zwischen dem Trapezlenker 12 und dem Radträger 22 und die äußere Lagerstelle 14c des Dreieckslenker 14 in der Seitenansicht gesehen derart positioniert, dass deren Verbindungsgerade 26 im Wesentlichen senkrecht und in oder nahe der Raddrehachse 28 verläuft.

An dem Lenkarm 22b des Radträgers 22 ist des weiteren ein spurführender Lenker 30 über eine Lagerstelle 30a angelenkt, der über eine weitere Lagerstelle 30b räumlich zwischen den Lagerstellen 12b und 14b am Hilfsrahmen 16 angelenkt ist. Die Lagerstellen 30a, 30b sind wiederum an sich bekannte Gummi-Metall-Hülsenlager. Der Lenker 30 erstreckt sich wie ersichtlich im Wesentlichen in Fahrzeugquerrichtung, wobei die Lagerstelle 30a etwa in Höhe der Raddrehachse 28 liegt.

Die Koppelstange 24 verbindet die Lagerstelle 12d des Trapezlenkers 12 mit der Lagerstelle 22c des Radträgers 22 in senkrechter Richtung relativ steif, während sie in Querrichtung aufgrund der etwa achsparallelen, in Fahrzeuglängsrichtung ausgerichteten Gelenkachsen 12e, 22d (**Fig. 1**) nachgiebig ist.

Demzufolge kann über die vorgegebene Kinematik des spurführenden Lenkers 30 der Radträger 22 über die Lagerstellen 12c, 14c bzw. über die durch diese definierte Lenkachse 26 zur Einstellung eines definierten Spurverhaltens der Radaufhängung 10 eingestellt werden. Andererseits leitet die Koppelstange 24 durch Brems- und Antriebsmomente auftretende Momente am Radträger 22 vorteilhaft über den Trapezlenker 12 in den Hilfsrahmen 16 des Kraftfahrzeuges ein.

Ferner kann durch die räumliche Anordnung der Gelenkachsen 18 und 12e des Trapezlenkers 12 der Momentanpol vor die Raddrehachse 28 und oberhalb diese gelegt werden, wodurch der Bremsstützwinkel und der Anfahrstützwinkel definiert durch die Längspollage (= Schnittpunkt des Momentanpols mit der Fahrzeuglängsvertikalebene durch die Raddrehachse 28) optimal ausgelegt werden können.

Die Kinematik des Lenkers 30 beim Ein- und Ausfedern der Radaufhängung 10 definiert sich aus der Anordnung der Lagerstellen 30a, 30b hinsichtlich ihres Abstandes zueinander (Länge) und deren räumlicher Positionierung (Neigung) zwischen den Lenkern **12, 14**.

Zudem sind die Lagerkennungen der Lagerstellen 30a, 30b des Lenkers 30 härter als die Lagerkennungen der Lagerstellen 12a, 12b, 12c sowie der Lagerstellen 14a, 14b, 14c (oder einiger dieser Lagerstellen) der Lenker 12, 14 ausgelegt. Daraus resultiert eine komfortable Fahrwerksdämpfung im Fahrbetrieb, verbunden mit einer bei Seitenkräften bzw. beim Durchfahren von Kurven sich einstellenden, elastokinematischen Untersteuertendenz des Kraftfahrzeuges, weil das jeweils kurvenäußere Hinterrad in die Kurve "einlenkt" bzw. im Rahmen der vorgegebenen Lagerelastizitäten auf Vorspur gehen kann.

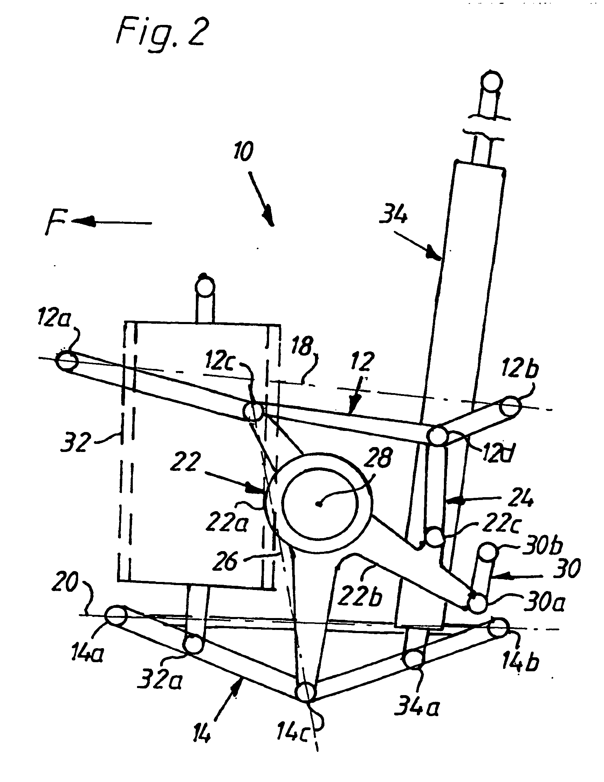

In Fahrtrichtung F vor dem Trapezlenker 12 ist eine Tragfeder 32 vorgesehen, die z. B. eine Schraubendruckfeder oder eine Gasdruckfeder sein kann. Dazu ist der Trapezlenker 12 mit einer halbkreisförmigen Einbuchtung 12f (**Fig.1**) versehen, die eine baulich günstige Anordnung der Tragfeder 32 in Längsrichtung nahe den Lagerstellen 12c, 14c bei einer dennoch breiten Abstützbasis der Lagerstellen 12a, 12b ermöglicht. Die Tragfeder 32 (vgl. **Fig. 2**) ist am Dreieckslenker 14 der Radaufhängung 10 und in nicht dargestellter Weise am Aufbau des Kraftfahrzeuges abgestützt.

In Fahrtrichtung F hinter dem Trapezlenker 12 ist ein Teleskop-Stoßdämpfer 34 im Wesentlichen senkrechter Ausrichtung positioniert, der ebenfalls am Dreieckslenker 14 und in nicht dargestellter Weise am Aufbau des Kraftfahrzeuges angelenkt ist. Zur Sicherstellung eines definierten Freiganges zwischen dem Stoßdämpfer 34 und dem spurführenden Lenker 30 ist der Lenker 30 mit einer Einbuchtung 30c **(****Fig.1****)** versehen.

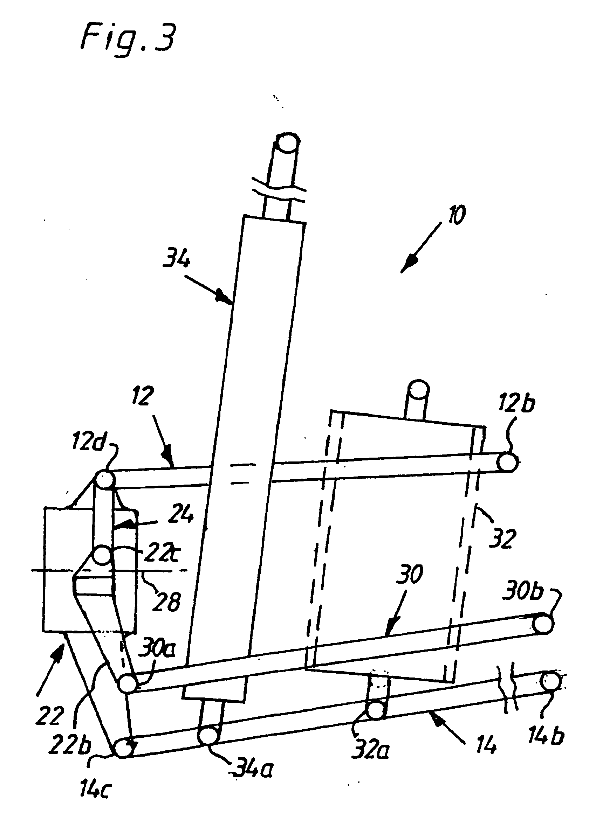

Die Tragfeder 32 und der Stoßdämpfer 34 sind in der Seitenansicht der Radaufhängung 10 gesehen beiderseits der senkrechten Radmittelebene am Dreieckslenker 14 über Lagerstellen 32a, 34a (**Fig. 2** **und** **3**) angelenkt, so dass sich bei Ein- und Ausfederbewegungen der Radaufhängung 10 ergebende, dynamische Feder- und Dämpfermomente zumindest teilweise ausgleichen und keine den Fahrkomfort beeinträchtigende Lagerverspannungen verursachen.

Abweichend vom dargestellten Ausführungsbeispiel kann der Stoßdämpfer 34 auch an einem Ausleger angelenkt sein, der am Radträger 22 vorgesehen ist. Am Dreieckslenker 14 ist ferner in Fahrtrichtung F vorne liegend der Arm 36a eines Querstabilisators 36 in nicht dargestellter Weise über eine etwa senkrecht verlaufende Koppel angelenkt.

Der spurführende Lenker 30 kann anstelle seiner ortsfesten Anlenkung am Hilfsrahmen 16 auch zur Schaffung einer aktiven Hinterachslenkung mit einem am Hilfsrahmen 16 oder am Aufbau des Kraftfahrzeuges vorgesehenen Aktuator oder einer Lenkeinrichtung verbunden sein und somit eine Lenkung des Hinterrades im Rahmen der Lagerelastizitäten der Lagerstellen 12c, 14c ermöglichen.

## Patentansprüche

1. Radaufhängung (10) für Kraftfahrzeuge, insbesondere unabhängige Radaufhängung für die hinteren Räder von Kraftfahrzeugen, mit einem Radträger (22), der über eine Lenkeranordnung mit einem Aufbau oder einem Hilfsrahmen (16) verbunden ist, wobei die Lenkeranordnung einen in einer oberen Lenkerebene liegenden, verwindungs- und biegesteifen oberen, als Trapezlenker ausgebildeten Querlenker (12), der wenigstens zwei äußere radträgerseitige Lagerstellen (12c, 12d) aufweist und der mit dem Radträger (22) unter Zwischenschaltung eines Koppelelementes (24) verbunden ist, und wenigstens einen weiteren, in Fahrzeughochachsenrichtung beabstandet unterhalb des oberen Querlenkers (12), in einer unteren Lenkerebene liegenden Querlenker (14) aufweist, wobei das zwischen dem oberen Querlenker (12) und dem Radträger (22) angeordnete Koppelelement (24) in Fahrzeugquerrichtung nachgiebig und zusätzlich in Fahrzeughochachsenrichtung steif ausgebildet ist, und wobei zur Spurführung ein zusätzlicher, spurführender Lenker (30) vorgesehen ist, **dadurch gekennzeichnet, dass** das Koppelelement durch eine etwa senkrecht ausgerichtete Koppelstange (24) gebildet ist, die mit lediglich einer der äußeren Lagerstellen (12c, 12d) des oberen Querlenkers (12) und mit dem Radträger (22) in Fahrzeugquerrichtung über wenigstens eine in etwa in Fahrzeuglängsrichtung ausgerichtete Dreh- und/oder Gelenkachse (12e, 22d) nachgiebig verbunden ist, und dass eine zweite äußere Lagerstelle (12c) des Trapezlenkers (12) direkt mit dem Radträger (22) verbunden ist.

2. Radaufhängung nach Anspruch 1, **dadurch gekennzeichnet, dass** der obere Querlenker als Trapezlenker (12), der ebenso wie der wenigstens eine untere Querlenker (14) schwenkbar mit einem Aufbau oder einem Hilfsrahmen des Kraftfahrzeuges verbunden ist.

3. Radaufhängung nach Anspruch 1 oder 2, **dadurch gekennzeichnet, dass** der Trapezlenker (12) zwei äußere, dem Radträger (22) zugeordnete Lagerstellen (12c, 12d) aufweist.

4. Radaufhängung nach einem der Ansprüche 1 bis 3, **dadurch gekennzeichnet, dass** die aufbauseitigen Dreh- und/oder Gelenkachsen (18, 20) der beiden Lenker (12, 14) im Wesentlichen parallel angeordnet sind.

5. Radaufhängung nach einem der Ansprüche 1 bis 4, **dadurch gekennzeichnet, dass** das Koppelelement (24) außerhalb einer senkrechten Radmittenebene angeordnet ist, bevorzugt in Fahrzeuglängsrichtung und/oder in Fahrtrichtung gesehen hinter der senkrechten Radmittenebene angeordnet ist, höchst bevorzugt in Fahrtrichtung und/oder in Fahrzeuglängsrichtung gesehen hinter der senkrechten Radmittenebene zwischen einer in Fahrtrichtung und/oder in Fahrzeuglängsrichtung gesehen hinteren, äußeren Lagerstelle (12d) des als Trapezlenker ausgebildeten oberen Querlenkers (12) und dem Radträger (22) angeordnet ist.

6. Radaufhängung nach einem der Ansprüche 1 bis 5, **dadurch gekennzeichnet, dass** der zusätzliche, spurführende Lenker (30) außerhalb der senkrechten Radmittenebene am Radträger (22) und andererseits aufbauseitig, insbesondere an einem Achsträger, angebunden und/oder angelenkt ist, wobei der spurführende Lenker (30) bevorzugt in Fahrzeuglängsrichtung und/oder in Fahrtrichtung gesehen hinter der senkrechten Radmittenebene angeordnet ist.

7. Radaufhängung nach einem der Ansprüche 1 bis 6, **dadurch gekennzeichnet, dass** der zusätzliche, spurführende Lenker (30) zwischen der oberen und der unteren Lenkerebene verläuft.

8. Radaufhängung nach einem der Ansprüche 1 bis 7, **dadurch gekennzeichnet, dass** der spurführende Lenker (30) von seiner radträgerseitigen Lager- und/oder Anbindungsstelle (30a) ausgehend in Fahrzeugquerrichtung und/oder in Richtung Fahrzeugmitte hin schräg nach oben oder unten in Fahrzeughochachsenrichtung ansteigt, bevorzugt mit einem Winkel von -5° bis +30°, höchst bevorzugt mit einem Winkel von +4° bis +10°, gegen eine Fahrzeughorizontalebene, die durch die Fahrzeuglängs- und Fahrzeugquerachse aufgespannt ist, geneigt ist.

9. Radaufhängung nach einem der Ansprüche 1 bis 8, **dadurch gekennzeichnet, dass** der zusätzliche, spurführende Lenker (30) bezogen auf die in Fahrzeugquerrichtung verlaufende senkrechte Radmittenebene auf der gleichen Seite wie das Koppelelement (24) am Radträger (22) angelenkt ist, bevorzugt mit einem in etwa gleichen Abstand von der senkrechten Radmittenebene.

10. Radaufhängung nach Anspruch 9, **dadurch gekennzeichnet, dass** der spurführende Lenker (30) in Fahrzeughochachsenrichtung gesehen unterhalb des Koppelelementes (24) am Radträger (22) angelenkt ist.

11. Radaufhängung nach einem der Ansprüche 1 bis 10, **dadurch gekennzeichnet, dass** die zweite äußere Lagerstelle (12e) des Trapezlenkers (12) weiter mit der radträgerseitigen Lagerstelle (14c) des unteren Querlenkers (14) eine Lenkachse (26) definiert, die zumindest annähernd durch die Raddrehachse (28) des Rades verläuft.

12. Radaufhängung nach einem der Ansprüche 1 bis 11, **dadurch gekennzeichnet, dass** die zweite äußere Lagerstelle (12c) des Trapezlenkers (12) in Fahrzeuglängsrichtung und/oder in Fahrtrichtung gesehen vor der ersten äußeren Lagerstelle (12d) liegt und einen Abstand von 0 bis 500 mm, bevorzugt von 30 bis 150 mm, von der senkrechten Radmittenebene aufweist.

13. Radaufhängung nach einem der Ansprüche 1 bis 12, **dadurch gekennzeichnet, dass** der Abstand zwischen den beiden äußeren Lagerstellen (12c, 12d) des Trapezlenkers (12) 0, insbesondere 5 bis 500 mm, bevorzugt 100 bis 250 mm beträgt.

14. Radaufhängung nach einem der Ansprüche 1 bis 13, **dadurch gekennzeichnet, dass** die zweite äußere Lagerstelle (12c) im Verhältnis zur ersten äußeren Lagerstelle (12d) in Fahrzeugquerrichtung dergestalt nach innen zur Fahrzeugmitte hin versetzt ist, dass der Längspol in Fahrzeuglängsrichtung bzw. Fahrtrichtung gesehen vor und/oder über Radmitte positioniert ist.

15. Radaufhängung nach einem der Ansprüche 1 bis 14, **dadurch gekennzeichnet, dass** der zusätzliche, spurführende Lenker (30) und das Koppelelement (24) an einem an den Radträger (22) angeformten Lenkarm (22b) angelenkt sind.

16. Radaufhängung nach einem der Ansprüche 1 bis 15, **dadurch gekennzeichnet, dass** die Lagerkennungen der Lagerstellen (30a, 30b) des spurführenden Lenkers (30) steifer als die Lagerkennungen der übrigen Lenker (12, 14) ausgelegt sind.

17. Radaufhängung nach einem der Ansprüche 1 bis 16, **dadurch gekennzeichnet, dass** der wenigstens eine untere Querlenker durch wenigstens einen Stablenker oder bevorzugt durch einen Dreieckslenker (14) mit zwei aufbauseitigen oder hilfsrahmenseitigen Lagerstellen (14a, 14b) und einer radträgerseitigen Lagerstelle (14c) gebildet ist.

18. Radaufhängung nach einem der Ansprüche 1 bis 17, **dadurch gekennzeichnet, dass** zwischen dem Aufbau und der Radaufhängung eine Tragfeder (32) und/oder ein Stoßdämpfer (34) angeordnet ist.

19. Radaufhängung nach Anspruch 18, **dadurch gekennzeichnet, dass** die Tragfeder (32) in Fahrtrichtung des Kraftfahrzeuges vor dem oberen Querlenker, insbesondere Trapezlenker (12), und/oder der Stoßdämpfer (34) hinter dem oberen Querlenker, insbesondere Trapezlenker (12), angeordnet sind.

20. Radaufhängung nach Anspruch 18 oder 19, **dadurch gekennzeichnet, dass** die Tragfeder (32) an dem unteren Querlenker, insbesondere unteren Dreieckslenker (14), und/oder der Stoßdämpfer (34) am Radträger (22) oder ebenfalls am unteren Querlenker, insbesondere unteren Dreieckslenker (14), abgestützt sind.

21. Radaufhängung nach einem der Ansprüche 18 bis 20, **dadurch gekennzeichnet, dass** der verwindungs- und biegesteife obere Querlenker (12) und/oder der spurführende Lenker (30) mit Einbuchtungen (12f, 30c) für den Freigang der Tragfeder (32) und/oder des Stoßdämpfers (34) versehen sind.

22. Radaufhängung nach einem der Ansprüche 1 bis 21, **dadurch gekennzeichnet, dass** der spurführende Lenker (30), insbesondere zur Ausbildung einer aktiven Hinterachslenkung, mit wenigstens einem Stellelement gekoppelt ist, insbesondere aufbauseitig an einem Aktuator oder einer Lenkeinrichtung angelenkt ist.

## Claims

1. Wheel suspension (10) for motor vehicles, in particular an independent wheel suspension for the rear wheels of motor vehicles, comprising a wheel carrier (22) which is connected to a vehicle body or a subframe (16) via a link assembly, the link assembly comprising an upper transverse link (12) which is formed as a trapezoidal link, is resistant to torsion and bending, is located in an upper link plane, comprises at least two outer wheel-carrier-side bearing points (12c, 12d) and is connected to the wheel carrier (22) with insertion of a coupling element (24), and at least a further transverse link (14) which is located below the upper transverse link (12), with spacing in the direction of the vertical axis of the vehicle, in a lower link plane, the coupling element (24) arranged between the upper transverse link (12) and the wheel carrier (22) being resilient in the transverse direction of the vehicle and also rigid in the direction of the vertical axis of the vehicle, and an additional, tracking link (30) being provided for tracking, **characterised in that** the coupling element is formed by a coupling rod (24) which is orientated approximately vertically and is resiliently connected to only one of the outer bearing points (12c, 12d) of the upper transverse link (12) and to the wheel carrier (22) in the transverse direction of the vehicle via at least one axis of rotation and/or articulation (12e, 22d) which is orientated approximately in the longitudinal direction of the vehicle, and **in that** a second outer bearing point (12c) of the trapezoidal link (12) is connected directly to the wheel carrier (22).

2. Wheel suspension according to claim 1, **characterised in that** the upper transverse link as a trapezoidal link (12) which, like the at least one lower transverse link (14), is pivotally connected to a body or a subframe of the motor vehicle.

3. Wheel suspension according to either claim 1 or claim 2, **characterised in that** the trapezoidal link (12) comprises two outer bearing points (12c, 12d) which are assigned to the wheel carrier (22).

4. Wheel suspension according to any of claims 1 to 3, **characterised in that** the body-side axes of rotation and/or articulation (18, 20) of the two links (12, 14) are arranged substantially parallel.

5. Wheel suspension according to any of claims 1 to 4, **characterised in that** the coupling element (24) is arranged outside a vertical wheel centre plane, is preferably arranged behind the vertical wheel centre plane when viewed in the longitudinal direction of the vehicle and/or in the direction of travel, and is most preferably arranged behind the vertical wheel centre plane when viewed in the direction of travel and/or in the longitudinal direction of the vehicle, between an outer bearing point (12d), located to the rear when viewed in the direction of travel and/or in the longitudinal direction of the vehicle, of the upper transverse link (12) formed as a trapezoidal link and the wheel carrier (22).

6. Wheel suspension according to any of claims 1 to 5, **characterised in that** the additional, tracking link (30) is connected and/or articulated outside the vertical wheel centre plane to the wheel carrier (22) and, on the body side, in particular to a cross member, the tracking link (30) preferably being arranged behind the vertical wheel centre plane when viewed in the longitudinal direction of the vehicle and/or in the direction of travel.

7. Wheel suspension according to any of claims 1 to 6, **characterised in that** the additional, tracking link (30) extends between the upper and the lower link plane.

8. Wheel suspension according to any of claims 1 to 7, **characterised in that** the tracking link (30) slopes, starting from from its wheel-carrier-side bearing point and/or connecting point (30a), in the transverse direction of the vehicle and/or obliquely upwards towards the centre of the vehicle or downwards in the direction of the vertical axis of the vehicle, and is preferably inclined at an angle of from -5° to +30°, most preferably at an angle of from +4° to +10°, to a horizontal plane of the vehicle, which plane is fixed by the longitudinal axis and transverse axis of the vehicle.

9. Wheel suspension according to any of claims 1 to 8, **characterised in that**, in relation to the vertical wheel centre plane extending in the transverse direction of the vehicle, the additional, tracking link (30) is articulated to the wheel carrier (22) on the same side as the coupling element (24), preferably with approximately the same spacing from the vertical wheel centre plane.

10. Wheel suspension according to claim 9, **characterised in that** the tracking link (30) is articulated to the wheel carrier (22) below the coupling element (24) when viewed in the direction of the vertical axis of the vehicle.

11. Wheel suspension according to any of claims 1 to 10, **characterised in that** the second outer bearing point (12e) of the trapezoidal link (12) also defines, together with the wheel-carrier-side bearing point (14c) of the lower transverse link (14), a steering axis (26) which extends at least approximately through the axis of rotation (28) of the wheel.

12. Wheel suspension according to any of claims 1 to 11, **characterised in that**, when viewed in the longitudinal direction of the vehicle and/or in the direction of travel, the second outer bearing point (12c) of the trapezoidal link (12) is located in front of the first outer bearing point (12d) and has spacing of from 0 to 500 mm, preferably from 30 to 150 mm, from the vertical wheel centre plane.

13. Wheel suspension according to any of claims 1 to 12, **characterised in that** the spacing between the two outer bearing points (12c, 12d) of the trapezoidal link (12) is 0, in particular 5, to 500 mm, preferably 100 to 250 mm.

14. Wheel suspension according to any of claims 1 to 13, **characterised in that**, in relation to the first outer bearing point (12d), the second outer bearing point (12c) is offset inwards towards the centre of the vehicle in the transverse direction of the vehicle, in such a way that the longitudinal pole is positioned in front of and/or above the centre of the wheel when viewed in the longitudinal direction of the vehicle or in the direction of travel.

15. Wheel suspension according to any of claims 1 to 14, **characterised in that** the additional, tracking link (30) and the coupling element (24) are articulated to a steering arm (22b) which is integrally formed on the wheel carrier (22).

16. Wheel suspension according to any of claims 1 to 15, **characterised in that** the bearing characteristics of the bearing points (30a, 30b) of the tracking link (30) are more rigid than the bearing characteristics of the other links (12, 14).

17. Wheel suspension according to any of claims 1 to 16, **characterised in that** the at least one lower transverse link is formed by at least one rod link or preferably by a wishbone (14) having body-side or auxiliary-frame-side bearing points (14a, 14b) and a wheel-carrier-side bearing point (14c).

18. Wheel suspension according to any of claims 1 to 17, **characterised in that** a suspension spring (32) and/or a shock absorber (34) is arranged between the body and the wheel suspension.

19. Wheel suspension according to claim 18, **characterised in that** the suspension spring (32) is arranged in front of the upper transverse link, in particular trapezoidal link (12), and/or the shock absorber (34) is arranged behind the upper transverse link, in particular trapezoidal link (12), in the direction of travel of the motor vehicle.

20. Wheel suspension according to either claim 18 or claim 19, **characterised in that** the suspension spring (32) is supported on the lower transverse link, in particular lower wishbone (14), and/or the shock absorber (34) is supported on the wheel carrier (22) or likewise on the lower transverse link, in particular lower wishbone (14).

21. Wheel suspension according to any of claims 18 to 20, **characterised in that** the torsion and bending resistant upper transverse link (12) and/or the tracking link (30) are provided with concave portions (12f, 30c) for the free passage of the suspension spring (32) and/or of the shock absorber (34).

22. Wheel suspension according to any of claims 1 to 21, **characterised in that**, in particular for forming an active rear axle steering system, the tracking link (30) is coupled to at least one control element, in particular is articulated on the body side to an actuator or a steering device.

## Revendications

1. Suspension de roue (10) pour véhicules automobiles, en particulier suspension de roue indépendante pour les roues arrière de véhicules automobiles, avec un support de roue (22) qui est relié, via un aménagement de suspension, à une structure ou à un châssis auxiliaire (16), dans laquelle l'aménagement de suspension présente un bras de suspension transversal (12) conformé en bras de suspension trapézoïdal supérieur résistant à la torsion et à la flexion et qui se trouve dans un plan de suspension supérieur, lequel bras de suspension transversal présente au moins deux points d'appui externes côté support de roue (12c, 12d) et qui est relié au support de roue (22) en intercalant un élément de couplage (24), et présente au moins un autre bras de suspension transversal (14) qui se trouve dans un plan de suspension inférieur à distance, dans la direction de l'axe vertical du véhicule, en dessous du bras de suspension transversal supérieur (12), dans laquelle l'élément de couplage (24) aménagé entre le bras de suspension transversal supérieur (12) et le support de roue (22) est conformé de manière souple dans la direction transversale du véhicule et en outre rigide dans la direction de l'axe vertical du véhicule, et dans laquelle il est prévu pour l'alignement un bras de suspension d'alignement supplémentaire (30), **caractérisée en ce que** l'élément de couplage est formé par une tige de couplage (24) orientée plus ou moins verticalement, laquelle tige est reliée de manière souple avec simplement un des points d'appui externes (12c, 12d) du bras de suspension transversal supérieur (12) et avec le support de roue (22) dans la direction transversale du véhicule via au moins un axe de rotation et/ou d'articulation (12e, 22d) orienté plus ou moins dans une direction longitudinale du véhicule, et **en ce qu'**un autre point d'appui externe (12c) du bras de suspension trapézoïdal (12) est lié directement au support de roue (22).

2. Suspension de roue selon la revendication 1, **caractérisée en ce que** le bras de suspension transversal supérieur se présente sous la forme d'un bras de suspension trapézoïdal (12), qui est relié, tout comme le ou moins un bras de suspension transversal inférieur (14), à pivotement à une structure ou un châssis auxiliaire du véhicule automobile.

3. Suspension de roue selon la revendication 1 ou la revendication 2, **caractérisée en ce que** le bras de suspension trapézoïdal (12) présente deux points d'appui (12c, 12d) externes affectés au support de roue (22).

4. Suspension de roue selon l'une quelconque des revendications 1 à 3, **caractérisée en ce que** les axes de rotation et/ou d'articulation côté carrosserie (18, 20) des deux bras de suspension (12, 14) sont aménagés sensiblement en parallèle.

5. Suspension de roue selon l'une quelconque des revendications 1 à 4, **caractérisée en ce que** l'élément de couplage (24) est agencé à l'extérieur d'un plan central de roue vertical, de préférence, en se plaçant dans la direction longitudinale du véhicule et/ou dans le sens de déplacement, derrière le plan central de roue vertical, mieux encore, en se plaçant dans le sens de déplacement et/ou dans la direction longitudinale du véhicule, derrière le plan central de roue vertical entre un point d'appui externe (12d) - arrière en se plaçant dans le sens de déplacement et/ou dans la direction longitudinale du véhicule - du bras de suspension transversal supérieur (12) conformé en bras de suspension trapézoïdal et le support de roue (22).

6. Suspension de roue selon l'une quelconque des revendications 1 à 5, **caractérisée en ce que** le bras de suspension d'alignement supplémentaire (30) est relié et/ou articulé à l'extérieur du plan de roue central vertical sur le support de roue (22) et, d'autre part, côté structure, en particulier sur un support axial, dans laquelle le bras de suspension d'alignement (30) est agencé de préférence en se plaçant dans la direction longitudinale du véhicule et/ou dans le sens de déplacement derrière le plan de roue central vertical.

7. Suspension de roue selon l'une quelconque des revendications 1 à 6, **caractérisée en ce que** le bras de suspension d'alignement supplémentaire (30) s'étend entre le plan de suspension supérieur et le plan de suspension inférieur.

8. Suspension de roue selon l'une quelconque des revendications 1 à 7, **caractérisée en ce que** le bras de suspension d'alignement (30) augmente à partir de son point d'appui et/ou de liaison (30a) côté support de roue dans la direction transversale du véhicule et/ou dans la direction du centre du véhicule en oblique vers le haut ou vers le bas dans la direction verticale du véhicule, de préférence en rampe sous un angle de -5 ° à + 30 °, mieux encore sous un angle de +4 ° à +10 °, par rapport à un plan horizontal du véhicule qui est cadré par les axes longitudinal et transversal du véhicule.

9. Suspension de roue selon l'une quelconque des revendications 1 à 8, **caractérisée en ce que** le bras de suspension d'alignement supplémentaire (30) est articulé au support de roue (22) par rapport au plan de roue central vertical s'étendant dans la direction transversale du véhicule du même côté que l'élément de couplage (24), de préférence à une distance à peu près la même du plan de roue central vertical.

10. Suspension de roue selon la revendication 9, **caractérisée en ce que** le bras de suspension d'alignement (30) est articulé, en se plaçant dans la direction verticale du véhicule, en dessous de l'élément de couplage (24) sur le support de roue (22).

11. Suspension de roue selon l'une quelconque des revendications 1 à 10, **caractérisée en ce que** le second point d'appui externe (12e) du bras de suspension trapézoïdal (12) définit par ailleurs avec le point d'appui côté support de roue (14c) du bras de suspension transversal inférieur (14) un axe de suspension (26) qui s'étend au moins approximativement à travers l'axe de rotation (28) de la roue.

12. Suspension de roue selon l'une quelconque des revendications 1 à 11, **caractérisée en ce que** le second point d'appui externe (12c) du bras de suspension trapézoïdal (12) se situe, en se plaçant dans la direction longitudinale du véhicule et/ou dans le sens de déplacement, devant le premier point d'appui externe (12d) et présente une distance de 0 à 500 mm, de préférence de 30 à 50 mm, vis-à-vis du plan de roue central vertical.

13. Suspension de roue selon l'une quelconque des revendications 1 à 12, **caractérisée en ce que** la distance entre les deux points d'appui externes (12c, 12d) du bras de suspension trapézoïdal (12) atteint 0, en particulier 5, à 500 mm, de préférence 100 à 250 mm.

14. Suspension de roue selon l'une quelconque des revendications 1 à 13, **caractérisée en ce que** le second point d'appui externe (12c) est décalé par rapport à un premier point d'appui externe (12d) dans la direction transversale du véhicule vers l'intérieur en direction du centre du véhicule de sorte que le pôle longitudinal soit positionné, en se plaçant dans la direction longitudinale du véhicule ou dans le sens de déplacement, devant et/ou au centre de la roue.

15. Suspension de roue selon l'une quelconque des revendications 1 à 14, **caractérisée en ce que** le bras de suspension d'alignement supplémentaire (30) et l'élément de couplage (24) sont articulés sur un bras de suspension (22b) moulé sur le support de roue (22).

16. Suspension de roue selon l'une quelconque des revendications 1 à 15, **caractérisée en ce que** les caractéristiques des points d'appui (30a, 30b) du bras de suspension transversal d'alignement (30) sont plus consistantes que celles des bras de suspension restants (12, 14).

17. Suspension de roue selon l'une quelconque des revendications 1 à 16, **caractérisée en ce que** le au moins un bras de suspension transversal inférieur est formé par au moins un bras de suspension à barre ou de préférence par un bras de suspension triangulaire (14) avec deux points d'appui côté structure ou côté châssis auxiliaire (14a, 14b) et un point d'appui côté support de roue (14c).

18. Suspension de roue selon l'une quelconque des revendications 1 à 17, **caractérisée en ce que** l'on agence entre la structure et la suspension de roue un ressort porteur (32) et/ou un amortisseur de chocs (34).

19. Suspension de roue selon la revendication 18, **caractérisée en ce que** les ressorts porteurs (32) sont aménagés, dans le sens de déplacement du véhicule automobile, devant le bras de suspension transversal supérieur, en particulier le bras de suspension trapézoïdal (12) et/ou l'amortisseur de chocs (34) derrière le bras de suspension transversal supérieur, en particulier le bras de suspension trapézoïdal (12).

20. Suspension de roue selon la revendication 18 ou 19, **caractérisée en ce que** les ressort porteurs (32) sont appliqués sur le bras de suspension transversal inférieur, en particulier le bras de suspension triangulaire inférieur (14) et/ou l'amortisseur de chocs (34) sur le support de roue (22) ou également sur le bras de suspension transversal inférieur, en particulier le bras de suspension triangulaire inférieur (14).

21. Suspension de roue selon l'une quelconque des revendications 18 à 20, **caractérisée en ce que** le bras de suspension transversal supérieur (12) rigide à la déformation et à la flexion et/ou le bras de suspension d'alignement (30) sont pourvus d'indentations (12f, 30c) pour le passage libre des ressorts porteurs (32) et/ou de l'amortisseur de chocs (34).

22. Suspension de roue selon l'une quelconque des revendications 1 à 21, **caractérisée en ce que** le bras de suspension d'alignement (30), en particulier pour la formation d'une suspension d'essieu arrière active, est couplée avec au moins un élément de réglage, en particulier articulé côté structure sur un actionneur ou sur un dispositif de suspension.
